# EUROPEAN PATENT SPECIFICATION

(11) **EP 1 237 967 B1**
(45) Date of publication and mention of the grant of the patent: **10.01.2007**
(21) Application number: 00976769.0
(22) Date of filing: 01.11.2000
(51) Int. Cl.: C08G 18/00, C08G 18/76, C08G 18/48

(54) **PROCESS FOR PREPARING MDI PREPOLYMERS WITH REDUCED CONTENT OF FREE MDI MONOMER**
VERFAHREN ZUR HERSTELLUNG VON MDI-PRÄPOLYMEREN MIT REDUZIERTEM GEHALT AN FREIEM MDI-MONOMER
PROCEDE DE PREPARATION DE PREPOLYMERES MDI AYANT UN TAUX REDUIT DE MONOMERE MDI LIBRE

(30) Priority: 30.11.1999 US 450569
(43) Date of publication of application: 11.09.2002
(73) Proprietor: Chemtura Corporation, Middlebury, CT 06749 (US)
(72) Inventor: XIE, Rui, Marietta , Georgia 30067 (US); ROSENBERG, Ronald, Owen, Orange, CT 06477 (US); SINGH, Ajaib, Huntington, CT 06484 (US)
(74) Representative: Spott, Gottfried
(86) International application number: PCT/US2000/030062
(87) International publication number: WO 2001/040340

(56) References cited:
- US-A- 4 288 577
- US-A- 5 703 193
- PATENT ABSTRACTS OF JAPAN vol. 1996, no. 11, 29 November 1996 (1996-11-29) & JP 08 176252 A (MITSUI TOATSU CHEM INC), 9 July 1996 (1996-07-09)
- PATENT ABSTRACTS OF JAPAN vol. 018, no. 222 (C-1193), 21 April 1994 (1994-04-21) & JP 06 016767 A (SANYO CHEM IND LTD;OTHERS: 01), 25 January 1994 (1994-01-25)

## Description

### 1. Field of the Invention

The present invention relates to preparing castable polyurethane prepolymers containing reduced levels of unreacted diphenylmethane diisocyanate (MDI) monomer. In particular, this invention relates to a process for reducing the amount of residual aromatic diisocyanate monomer in a polyurethane prepolymer reaction product, which process is useful for producing high performance MDI-based cast polyurethane elastomers chain extended with diols and diamines, especially the FDA approved trimethylene glycol di-p-aminobenzoate. These systems provide improved industrial hygiene, easier casting, and improved mechanical properties.

### 2. Description of Related Art

Industrial polyurethane elastomers are most commonly based on either MDI or toluene diisocyanate (TDI) prepolymers. Polyurethane prepolymers for elastomers are normally made by reacting polyols with excess molar amounts of diisocyanate monomers. The use of excess diisocyanate monomer leaves residual unreacted monomer, resulting in potential industrial hygiene issues.

It is well known that both skin contact and inhalation of diisocyanate monomers must be carefully avoided. Much attention has been given to removal of unreacted TDI from prepolymers. Various methods to reduce the unreacted TDI levels in prepolymers are known and disclosed in, for example, U.S. Patent Nos. 3,248,372; 3,384,624; and 4,061,662. Commercial TDI prepolymers with below 0.1 % residual monomer are available.

However, much less attention has been given to removal of unreacted MDI from prepolymers owing to the greater difficulty of removing this higher boiling monomer from prepolymers. While MDI has a low vapor pressure, which limits its inhalation hazard, its hazard for skin contact is increasingly recognized. Once on the skin, MDI is very difficult to remove. See Wester, R*. et al.*, *Toxicol. Sci. 48(1):*1-4 (1999) and Klinger, T., *Controlling Dermal Exposure to Isocyanate: Maintaining the PMA's Leadership in Health and Safety,* a paper presented at the Polyurethane Manufacturer Association Meeting, Baltimore, MD, October, 1998. Unfortunately, commercial MDI prepolymers for castable elastomers typically contain at least 5% residual MDI monomer by weight.

Among the various processes that have been developed in attempts to reduce the quantity of unreacted monomeric diisocyanate levels in prepolymers are processes or methods that use falling film evaporators, wiped film evaporators, distillation techniques, solvent extraction, and molecular sieves. For example, U.S. Patent No. 4,182,825 describes a process to reduce the amount of diisocyanate (TDI) by distilling a prepolymer reaction product under vacuum conditions. U.S. Patent No. 4,385,171 describes a method for the removal of unreacted diisocyanate monomer (TDI) from prepolymers by codistilling the prepolymer reaction product with a compound that boils at a temperature greater than the boiling point of the diisocyanate. U.S. Patent No. 5,703,193 describes a process for reducing the amount of residual organic diisocyanate monomer, para-phenylene diisocyanate (PPDI), in prepolymers by codistilling the reaction product in the presence of a combination of two inert solvents, with the first inert solvent having a boiling point below the boiling point of the diisocyanate monomer and the second inert solvent having a boiling point above the boiling point of the diisocyanate monomer.

U.S. Patent No. 4,061,662 describes a process for the removal of unreacted toluene diisocyanate from prepolymers by passing the prepolymer reaction product through a column containing molecular sieves.

U.S. Patent No. 4,288,577 describes the removal of unreacted methylene bis(4-phenyl isocyanate) (MDI) via solvent extraction with hexane.

U.S. Patent No. 4,888,442 is directed to a process for reducing the free monomer content of polyisocyanate adduct mixtures wherein the adduct has an average isocyanate functionality of greater than about 1.8 which comprises treating the polyisocyanate adduct mixture in the presence of 2 to about 30 percent by weight of an inert solvent, based on the weight of the polyisocyanate mixture, in an agitated thin-layer evaporator under conditions sufficient to reduce the free monomer content of the polyisocyanate adduct mixture below that level which is obtainable in the absence of a solvent. By this process, polyurethane prepolymers of aliphatic diisocyanate monomer with 11-12% free monomer were reduced to 3.6-6.3% free monomer. Residual solvent levels were not disclosed.

Of these processes, distillation is much simpler and more economical than solvent extraction or molecular sieve adsorption. There is no need subsequently to separate the monomer from either (flammable) hexane solvent or molecular sieves. However, in the distillation of diisocyanate monomers from polyurethane prepolymers, high temperatures must be avoided to prevent decomposition reactions in the prepolymer. The distillation processes described above relate to removal of low boiling point diisocyanates, such as TDI and PPDI. MDI has not been easily removed by distillation owing to its much higher boiling point and the thermal sensitivity of MDI-based prepolymers.

Polyurethane prepolymers of both aromatic and aliphatic diisocyanates are heat-sensitive; however, prepolymers from aromatic diisocyanates are much more thermally unstable than prepolymers from aliphatic diisocyanates. Typical aliphatic diisocyanates include 1,6-hexane diisocyanate (HDI), isophorone diisocyanate (IPDI), and methylene bis (p-cyclohexyl isocyanate) (H12MDI). Prepolymers made from aromatic isocyanates are much less resistant to thermal degradation than those made from aliphatic diisocyanates, making removal of aromatic monomeric diisocyanate by distillation much more difficult, especially for monomers having a high boiling point, such as MDI. Distillation of common aliphatic diisocyanate monomers from prepolymers is much easier owing to their lower boiling points and much greater heat stability. However, polyurethanes based on aliphatic diisocyanates are generally accompanied by a decrease in mechanical properties. The presence of an aromatic isocyanate in the hard segment produces a stiffer polymer chain with a higher melting point (See Lamba, N. *et al., Polyurethanes in Biomedical Applications,* CRC Press LLC (1998), page 14). Thus, polyurethanes made from aromatic diisocyanates are more desirable in certain circumstances.

The two most commonly used aromatic diisocyanates are TDI and MDI. Other aromatic diisocyanates, such as naphthalene diisocyanate (NDI), 3,3'-bitoluene diisocyanate (TODI), and PPDI can also result in high-performance polymers, but at a higher cost than materials based on TDI or MDI. Aliphatic diisocyanates are also significantly more costly than TDI and MDI.

TDI-based solid polyurethane elastomers are most commonly made by reacting the liquid prepolymers with aromatic diamines, especially 4,4'-methylene-bis(2-chloroaniline) (MBCA) to give satisfactory properties. Diol curatives give generally inferior properties with TDI prepolymer. MBCA is suspected of being a carcinogen and thus requires careful attention to industrial hygiene during casting. It is unacceptable for biomedical and food industry applications.

For industrial safety, it would be particularly desirable to have prepolymers that are both (a) low in monomeric diisocyanate level and (b) capable of being used with diol chain extenders or aromatic amine chain extenders that are not suspected of causing cancer, for example, trimethylene glycol di-p-aminobenzoate. This aromatic amine has FDA approval for use in polyurethanes that are to be brought into contact with dry food and, unlike many other aromatic diamines, is not considered a suspect carcinogen. (C.F.R. 177.1680).

While currently-available commercial MDI-based prepolymers are most commonly chain-extended by industrially safe diols, such as 1,4-butanediol or hydroquinone bis(2-hydroxyethyl) ether, they contain a significant amount of monomeric MDI (typically at least 5%) - an industrial safety concern. Moreover, the high reactivity of the known MDI-based prepolymers makes it impractical to cast the prepolymers with diamine chain extenders, such as the FDA approved trimethylene glycol di-p-aminobenzoate. Thus, the known MDI-based prepolymers cannot provide the particular desirable casting elastomers discussed above.

For many applications, aromatic amine chain extenders are preferred to diol (glycol) chain extenders - "Glycol extended polyurethanes are more flexible and less strong than the amine-extended analogs" (Lamba, N., *et al., supra,* page 17) - and give generally higher hysteresis. Consequently, amine-extended polyurethanes are generally used in applications such as tires and rolls, which are subject to failure from overheating by hysteresis. Thus, it would be highly desirable to have MDI-based prepolymers that are capable to being chain-extended by a diamine curative, such as trimethylene glycol di-p-aminobenzoate, that is not a suspect carcinogen.

### SUMMARY OF THE INVENTION

It has now been found that unreacted MDI monomers can be removed from MDI-based prepolymers, whereby they are rendered capable of being chain-extended by a diamine curative, such as trimethylene glycol di-p-aminobenzoate.

It is an object of this invention to provide a new distillation method for removing diisocyanate monomers of high boiling point, particularly MDI, from a prepolymer reaction product mixture prepared by the reaction of an organic aromatic diisocyanate monomer with a polyol.

The present invention is in order to provide castable polyurethane systems that are hygienically safe, that can be cast without difficulty, and that provide elastomers having excellent mechanical properties.

The present invention relates to reducing the content of unreacted aromatic diisocyanate monomer (particularly MDI) in a prepolymer reaction product by distilling the reaction product in the presence of at least one inert solvent with a boiling point below that of the monomeric diisocyanate.

The ratio of the diisocyanate monomer, such as MDI, to the solvent can be from 10/90 to 90/10. The combination of the solvent and the monomeric diisocyanate represents about 15% to 85% of the total weight of the prepolymer reaction product mixture plus solvent.

In a preferred embodiment, three or more distillation stages are employed in series with successively more powerful vacuums to successively reduce the content of monomer and solvent in the prepolymer to below 0.1% by weight.

The present invention is useful in a process for the preparation of polyurethane elastomers by extending the chain lengths of prepolymers containing low concentrations of monomeric MDI. The chain extenders can be diols or diamines. The extender/prepolymer stoichiometry can range from about 75% to about 120% by weight, preferably from about 90% to about 105%. Extender/prepolymer stoichiometry means the ratio of available -OH and/or -NH₂ groups to -NCO groups.

More particularly, the present invention is directed to a process for reducing the amount of residual aromatic diisocyanate monomer in a polyurethane prepolymer reaction product comprising distilling the product in the presence of at least one inert solvent having a boiling point about 1°C to about 100°C, preferably about 20°C to about 80°C, below the boiling point of the diisocyanate monomer at a pressure of 10 torr, wherein the aromatic diisocyanate monomer has a boiling point above about 200°C at 10 torr, the weight ratio of the inert solvent to the residual aromatic diisocyanate monomer ranges from about 90:10 to about 10:90, and the inert solvent comprises about 5% to about 85% by weight, preferably about 30% to about 75% by weight, of the total weight of the combination of the prepolymer reaction product mixture plus solvents.

In another aspect, the present invention is useful for a prepolymer comprising the reaction product of a polyol and a stoichiometric excess of diphenylmethane diisocyanate monomer at an NCO:OH ratio in the range of from about 2:1 to about 20:1, wherein the unreacted diisocyanate monomer is removed by a process comprising distilling the reaction product in the presence of at least one inert solvent having a boiling point about 1°C to about 100°C below the boiling point of the diphenylmethane diisocyanate monomer at a pressure of 10 torr, wherein the weight ratio of the inert solvent to the residual diphenylmethane diisocyanate monomer ranges from about 90:10 to about 10:90, and the inert solvent comprises about 5% to about 85% by weight of the total weight of the combination of the prepolymer reaction product mixture plus solvents.

In still another aspect, the present invention is useful with regard to a polyurethane elastomer comprising the reaction product of i) a prepolymer terminated with diphenylmethane diisocyanate, said prepolymer comprising no more than about 0.3% free diphenylmethane diisocyanate and at least about 80% of theoretical NCO content for pure ABA structure with ii) a chain extender selected from the group consisting of 1,4-butanediol; 1,3-propanediol; ethylene glycol; 1,6-hexanediol; hydroquinone-bis-hydroxyethyl ether; resorcinol di(beta-hydroxyethyl) ether; resorcinol di(beta-hydroxypropyl) ether; 1,4-cyclohexane dimethanol; an aliphatic triol; an aliphatic tetrol; 4,4'-methylene-bis(2-chloroaniline); 4,4'-methylene-bis(3-chloro-2,6-diethylaniline); diethyl toluene diamine; t-butyl toluene diamine; dimethylthio-toluene diamine; trimethylene glycol di-p-amino-benzoate; methylenedianiline; methylenedianiline-sodium chloride complex; and mixtures thereof; wherein the equivalent ratio of chain extender to prepolymer is in the range of from about 0.7:1 to about 1.2:1.

The present invention is also useful with regard to a polyurethane elastomer comprising the reaction product of:
A) a diphenylmethane diisocyanate-terminated prepolymer comprising the reaction product of:
   i) a first polyol comprising at least one component having a low molecular weight in the range of from about 62 to about 400, and selected from the group consisting of ethylene glycol, isomers of propylene glycol, isomers of butane diol, trimethylolpropane, pentaerythritol, poly (tetramethylene ether) glycol, diethylene glycol, triethylene glycol, dipropylene glycol, tripropylene glycol, and mixtures thereof;
   ii) a second polyol having a high molecular weight in the range of from about 400 to about 5000; and
   iii) a stoichiometric excess of diphenylmethane diisocyanate monomer at an NCO:OH ratio in the range of from about 2:1 to about 20:1:
   wherein unreacted diphenylmethane diisocyanate monomer is removed from said reaction product by a process comprising distilling the reaction product in the presence of at least one inert solvent having a boiling point about 1°C to about 100°C below the boiling point of the diphenylmethane diisocyanate monomer at a pressure of 10 torr, wherein the weight ratio of the inert solvent to the residual diphenylmethane diisocyanate monomer ranges from about 90:10 to about 10:90, and the inert solvent comprises about 5% to about 85% by weight of the total weight of the combination of the prepolymer reaction product mixture plus solvents; with
B) a chain extender selected from the group consisting of 1,4-butanediol; 1,3-propanediol; ethylene glycol; 1,6-hexanediol; hydroquinone-bis-hydroxyethyl ether; resorcinol di(beta-hydroxyethyl) ether; resorcinol di(beta-hydroxypropyl) ether; 1,4-cyclohexane dimethanol; aliphatic triols; aliphatic tetrols; 4,4'-methylene-bis(2-chloroaniline); 4,4'-methylene-bis(3-chloro-2,6-diethylaniline); diethyl toluene diamine; t-butyl toluene diamine; dimethylthio-toluene diamine; trimethylene glycol di-p-amino-benzoate; methylenedianiline; methylenedianiline-sodium chloride complex; and mixtures thereof;
wherein the equivalent ratio of prepolymer to chain extender is in the range of from about 0.7:1 to about 1.2:1.

### DESCRIPTION OF THE PREFERRED EMBODIMENT(S)

The present invention is directed to the removal of monomeric diisocyanates, especially diisocyanates having high boiling points, e.g., MDI, from prepolymer reaction products. As employed herein, the term "prepolymer reaction product" means the product of the reaction of at least one polyol with at least one diisocyanate. Polyurethane prepolymers can be obtained by reacting the polyol with the diisocyanate monomer by procedures known in the art. According to the present invention, a prepolymer is made by the reaction of a polyol, such as a polyether or a polyester, with a large excess of a diisocyanate monomer, such as methylene bis (4-phenyldiisocyanate) (MDI) and/or its isomers. An inert solvent is used to facilitate removal of the monomeric diisocyanate(s) from the prepolymer.

The inert solvent should have a boiling point lower than that of the diisocyanate monomer(s) under vacuum conditions. For purposes of the present invention, the inert solvent should have a boiling point (bp) of from about 1°C to about 100°C, preferably about 20°C to about 80°C, below that of the diisocyanate at a vacuum of 10 torr. As employed herein, a described bp is at 10 torr unless otherwise specified. For MDI (bp 215°C), examples of suitable inert solvents include dimethyl phthalate (DMP) (bp 147°C), diethyl phthalate (bp 158°C), diisobutyl adipate (bp 168°C), and dibutyl phthalate (DBP) (bp 192°C). The preferred inert solvents are those that do not react with the prepolymers, do not decompose, and have good miscibility with the diisocyanates and prepolymers.

Solvents have previously only been applied to lower boiling, more easily distilled, aromatic diisocyanate monomers. For aromatic diisocyanates, such as TDI and PPDI, a solvent with a higher boiling point was always required, as disclosed in U.S. Patent Nos. 4,385,171 and 5,703,193. Solvents with lower boiling points were only used for aliphatic diisocyanates that generally have low boiling points and provide prepolymers having greater thermal stability than those provided by aromatic diisocyanates.

U.S. Patent No. 4,888,442 discloses removing the low boiling, aliphatic monomers 4,4'-methylene bis(cyclohexyldiisocyanate) and 1,6-diisocyanatohexane from mixtures of polyurethane prepolymer reaction products and solvents of lower boiling point by distillation. According to that process, the prepolymer reaction product was prepared without solvent. Unreacted diisocyanate level was first reduced by distilling the reaction product without solvent once, and further reduced by distilling the treated reaction product in the presence of 2 to 30% of an inert solvent. The process required separating the inert solvent from the diisocyanates if the solvent and/or the diisocyanates were to be reused, resulting in additional cost.

According to the present invention, it is practical to dissolve MDI in the inert solvent, such as DMP or DBP, at a temperature of about 50°C before charging the polyol, although the inert solvent could be blended in after the prepolymer is made, according to techniques well known in the art for the preparation of urethanes.

The weight ratio of MDI to solvent can range from about 10:90 to about 90:10; an MDI/solvent weight ratio from about 25:75 to about 65:35 is preferred. At higher ratios, the MDI may form crystals and precipitate out at room temperature, while at significantly lower ratios, the cost of removing the solvent during distillation may be unnecessarily high.

The polyurethane prepolymers can be made by reacting the diisocyanate monomers with high molecular weight polyols. The diisocyanate monomers are most typically TDI or MDI. MDI is commercially available as the pure 4,4'-diphenylmethane diisocyanate isomer (e.g., Mondur MP, Bayer) and as a mixture of isomers (e.g., Mondur ML, Bayer and Lupranate MI, BASF). As employed herein, "MDI" or "diphenylmethane diisocyanate" means all isomeric forms of diphenylmethane diisocyanate. The most preferred form is the pure 4,4'-isomer. Other aromatic diisocyanate monomers useful in the practice of the present invention include PPDI, tolidene diisocyanate (TODI), naphthalene-1, 5-diisocyanate (NDI), diphenyl-4, 4'-diisocyanate, stilbene-4,4'-diisocyanate, benzophenone-4,4'-diisocyanate, and mixtures thereof. Aliphatic diisocyanate monomers include dibenzyl-4,4'-diisocyanate, isophorone diisocyanate (IPDI), 1,3 and 1,4-xylene diisocyanates, 1,6-hexamethylene diisocyanate, 1,3-cyclohexyl diisocyanate, 1,4-cyclohexyl diisocyanate (CHDI), the three geometric isomers of 1,1'-methylene-bis(4-isocyanatocyclohexane) (H₁₂MDI), and mixtures thereof.

The polyols are typically polyether, polyester, and polycarbonate or hydrocarbon polyols having molecular weights ranging from about 250 to about 6000. Polyols having molecular weights in the range of from about 400 to about 3000 are normally used to prepare prepolymers, although glycols or triols having molecular weights of from about 62 to about 400 can be included under certain circumstances.

A mole ratio in the range from about 3:1 to about 20:1, preferably 5:1 to 10:1, MDI:polyol is recommended for use in the practice of the present invention. Reaction temperatures ranging from about 30°C to about 120°C are practical. Maintaining the reaction at a temperature in the range of from about 50°C to about 110°C with agitation is preferred.

When the preferred mole ratios of MDI to polyol and the weight ratios of MDI to solvent are observed, the reaction product can be transparent at room temperature, and primarily comprises an adduct having the "MDI-polyol-MDI" structure (here termed "ABA" structure, where A denotes MDI and B denotes a polyol). Higher molecular weight adducts containing two or more polyol moieties (here termed "oligomers" of structure "ABABA", "ABABABA", etc.) are usually less desirable.

Each ABA and ABABA adduct has two unreacted NCO groups, one on each of the terminal A moieties. The internal A moiety in the ABABA adduct has no remaining unreacted NCO group. Therefore, the ABABA adduct has a lower weight percentage NCO content than does the ABA adduct. Thus, in a prepolymer reaction product mixture substantially free of unreacted A, the relative content of ABA to higher molecular weight adducts can be determined by the percent NCO content of the mixture. A large molar excess of MDI over polyol minimizes oligomer formation. An MDI:polyol mole ratio of at least about 5:1 or greater favors formation of a final prepolymer (after removal of solvent and free MDI monomer) with NCO content at least about 80% of the theoretical NCO content for a pure ABA structure.

As an illustration, consider a difunctional polyol of number average molecular weight (mw) 1000. MDI has mw 250. Thus, the ABA adduct would have an mw of 250+1000+250, or 1500. It would also have two NCO end groups, of 42 daltons each. Thus, the NCO content would be 2(42)/1500=5.6% by weight for the ABA structure. By a similar calculation, it is seen that the ABABA structure would have an NCO content of 2(42)/2750=3.05%, by weight.

The crude reaction product prepared in accordance with the present invention contains a large amount of unreacted MDI and solvent, which are removed by distillation. Any distillation equipment that can be efficiently operated at deep vacuum, moderate temperature, and short residence time can be used in this step. For example, one can use an agitated film distillation system commercialized by Pope Scientific, Inc.; Artisan Industries, Inc.; GEA Canzler GmbH & Co.; Pfaudler-U.S., Inc.; InCon Technologies, L.L.C.; Luwa Corp.; UIC Inc.; or Buss-SMS GmbH for this purpose. Continuous units with internal condensers are preferred because they can reach lower operating vacuums of 0.001 to 1 torr.

It is practical to strip the excess MDI and solvent at a pressure around 0.04 Torr and at a temperature between about 120°C and about 175°C, although stripping at 0.02 torr or below and 140°C or below may generate the best results. The importance of minimizing high temperature degradation of prepolymers from aromatic diisocyanate monomers is described in U.K. Patent No. 1,101,410, which recommends that distillation be conducted under vacuum with an evaporative temperature preferably under 175°C. U.S. Patent No. 4,182,825 describes the use of evaporative jacket temperatures of 150-160° C for TDI prepolymers. U.S. Patent No. 5,703,193 recommends a jacket temperature of 120°C.

As a rule of thumb, it is desirable that, in the operation of agitated film distillation equipment, the condenser temperature for the distillate be at least about 100°C below the evaporative temperature. This provides a driving force for the rapid and efficient evaporation, then condensation, of the distillate. Thus, to distill off MDI monomer at an evaporator temperature of 140°C or lower (to avoid thermal decomposition of the prepolymer), a condenser temperature of 40°C or below is desirable. Since neat MDI has a melting point of about 40° C, a higher condenser temperature is required to prevent solidification of the MDI in the condenser. The use of a solvent permits condensation at lower temperatures, e.g., 30°C or lower. Thus, the use of a solvent makes possible the use of lower evaporator temperatures, thereby avoiding thermal decomposition of the prepolymer.

If the recommended stripping conditions are observed, the residue (prepolymer) can contain less than 0.1% solvent and about 0.1 to about 0.3% MDI after one pass, and the distillate can come out clean and remain transparent at room temperature. The distillate can then be reused to produce more prepolymer. Monomeric MDI level can drop down to less than 0.1 % after two or three passes. This is in sharp contrast to the non-solvent process described in U.S. Patent No. 5,703,193, in which the free MDI level is reduced from an estimated starting level of about 57% to 21%, 3.0%, and 0.7% after the first, second, and third passes, respectively, when carried out under similar conditions.

Generally, the prepolymers obtained by the process of the present invention can have low viscosities, low monomeric MDI levels, and high NCO contents, e.g., 80% or more of the theoretical NCO content for the ABA structure. The prepolymers can be easily chain-extended by various chain extenders at moderate processing temperatures, even with neat diamines that are not practical for hot-casting of conventional MDI-based prepolymers. The chain extenders can, for example, be water, aliphatic diols, aromatic diamines, or their mixtures.

Representative preferred chain extenders include aliphatic diols, such as 1,4-butanediol (BDO), resorcinol di (beta-hydroxyethyl) ether (HER), resorcinol di(beta-hydroxypropyl) ether (HPR), hydroquinone-bis-hydroxyethyl ether (HQEE), 1,3-propanediol, ethylene glycol, 1,6-hexanediol, and 1,4-cyclohexane dimethanol (CHDM); aliphatic triols and tetrols, such as trimethylol propane: and adducts of propylene oxide and/or ethylene oxide having molecular weights in the range of from about 190 to about 500, such as various grades of Voranol (Dow Chemical), Pluracol (BASF Corp.) and Quadrol (BASF Corp.).

Preferred diamine chain extenders include 4,4'-methylene-bis(2-chloroaniline) (MBCA); 4,4'-methylene-bis(3-chloro-2,6-diethylaniline (MCDEA); diethyl toluene diamine (DETDA, Ethacure^{™} 100 from Albemarle Corporation); tertiary butyl toluene diamine (TBTDA); dimethylthio-toluene diamine (Ethacure^{™} 300 from Albemarle Corporation); trimethylene glycol di-p-amino-benzoate (Vibracure® A157 from Uniroyal Chemical Company, Inc. or Versalink 740M from Air Products and Chemicals); methylenedianiline (MDA); and methylenedianiline-sodium chloride complex (Caytur® 21 and 31 from Uniroyal Chemical Company, Inc.).

The most preferred chain extenders are BDO, HQEE, MBCA, Vibracure A157, MCDEA, Ethacure 300, and DETDA.

Polyurethane elastomers can be made by extending the chains of the prepolymers having low monomeric MDI content with the above chain extenders by methods known in the art. The amine or diol chain extender and the prepolymer are mixed together to polymerize. The chain extension temperature will typically be within the range of about 20°C to about 150°C. The specimens so obtained are normally aged for about 4 weeks at room temperature before being submitted for standard tests of mechanical properties.

For industrial casting operations, a working life (pour life) of at least sixty seconds is typically required to mix the prepolymer and the chain extender and to pour the mixture into molds without bubbles. In many cases, a working life of 5 to 10 minutes is preferred. For purposes of the present invention, "working life" (or "pour life") means the time required for the mixture of prepolymer and chain extender to reach a Brookfield viscometer viscosity of 200 poise when each component is "preheated" to a temperature at which the viscosity is 15 poise or lower, preferably 10 poise or lower, except where stated otherwise. Some less common industrial casting operations for simple articles permit the use of higher viscosity and shorter pour life.

The advantages and the important features of the present invention will be more apparent from the following examples.

### EXAMPLES

The following materials were used in the examples:
Acclaim^{™} 4220: mw=4037, Lyondell Chemical Company, PPG diol polymer from propylene oxide ("PPG 4000")
Acclaim^{™} 3201: mw=3074, Lyondell Chemical Company, PPG-EO diol (copolymer from propylene oxide and ethylene oxide) ("PPG-EO 3000")
Adiprene® LF 1800A: Prepolymer consisting essentially of PEAG 2000 and TDI with below 0.1 % monomeric TDI
Arcol R-2744: mw=2240, Lyondell Chemical Company, PPG diol ("PPG 2000") Diethylene glycol: mw=106, Aldrich Chemical Company, Inc.
Eastman® DMP: mw=194, dimethyl phthalate (DMP), Eastman Chemical Company Mondur MP: mw=250, methylene bis (4-phenyldiisocyanate) (MDI), Bayer Corporation
Nuoplaz DOA: mw=371, dioctyl adipate, Nuodex Inc.
PEAG 1000: mw=980, Witco Chemical Corporation, PEAG diol
PEAG 2000: mw=1990, Witco Chemical Corporation, PEAG diol
PEAG 2500: mw=2592, Ruco Polymer Corp., PEAG diol
Terathane 1000: mw=994, Du Pont, PTMEG diol ("PTMEG 1000")
Terathane 2000: mw=2040, Du Pont, PTMEG diol ("PTMEG 2000")
Tripropylene glycol: mw= 192, Aldrich Chemical Company, Inc.
Uniplex 150: mw=278, dibutyl phthalate, Unitex Chemical Corporation ("DBP")
Vibrathane 8585: Prepolymer consisting essentially of PEAG 2000 and MDI with ca. 10-13% monomeric MDI. Uniroyal Chemical Company, Inc.
Vibrathane® 8086: Prepolymer consisting essentially of PEAG 2000 and TDI with ca. 2% monomeric TDI

The low monomeric MDI content prepolymers prepared according to the present invention were prepared according to the following general prepolymer synthesis procedure.

### Examples 1-10

### Preparation of Prepolymer Reaction Mixtures

Examples 1-10, shown in Table 1, were prepared by reacting the polyol with excess MDI at temperatures in the range of from 60°C to 85°C. The MDI was first dissolved in DMP to make a 50/50 solution and then preheated to the reaction temperature before the polyol was charged. The reaction mixture was held at the reaction temperature for at least 4-6 hours under dry nitrogen and with agitation. The reaction mixture was then pre-degassed at about 1-10 torr. Unreacted MDI and solvent were then removed by a wiped film evaporator.

| Table 1 | | | | | | | | | | |
|---|---|---|---|---|---|---|---|---|---|---|
| Examples | 1 | 2 | 3 | 4 | 5 | 6 | 7 | 8 | 9 | 10 |
| Polyols | A | B | C | D | E | F | G | H | I | J |
| NCO:OH Reaction Ratio | 10:1 | 10:1 | 6:1 | 10:1 | 6:1 | 10:1 | 10:1 | 10:1 | 10:1 | 10:1 |
| NCO Content (Prepolymer) | 5.25 | 3.20 | 4.97 | 3.18 | 2.38 | 2.98 | 2.31 | 1.74 | 10.8 | 12.4 |
| % MDI Monomer (Prepolymer) | 0.012 | 0.012 | 0.016 | 0.011 | 0.017 | <0.1 | <0.1 | <0.1 | <0.3 | <0.3 |
| % MDI (Distillate) | 45 | 45 | 41 | 45 | 41 | 45 | 45 | 45 | 45 | 45 |

A is PTMEG 1000 F is PPG 2000
B is PTMEG 2000 G is PPG-EO 3000
C is PEAG 1000 H is PPG 4000
D is PEAG 2000 I is Tripropylene Glycol
E is PEAG 3000 J is Diethylene Glycol

### Example 11

### Preparation of Purified MDI/ Solvent Solution by Distillation

MDI was first dissolved in dibutyl phthalate to make a 50/50 solution at about 50°C. The solution was slightly cloudy when cooled down to 25°C, reflecting the presence of insoluble impurities, such as MDI dimer or MDI reaction product with trace water in the solvent. The solution was purified by distillation according to the procedure described in Example 14. The collected distillate was transparent and colorless and contained about 48% MDI by weight, having an NCO content of 16% (48% of the NCO content of 33.6% for pure MDI).

### Example 12

### Preparation of Prepolymer from Purified MDI/Solvent Solution

A prepolymer was prepared by reacting PEAG 2500 with excess MDI at a molar ratio of 1:6 using the purified MDI/DBP solution described in Example 11. The reaction was conducted according to the general procedure described for Examples 1-10. The unreacted MDI and DBP were then removed by distillation according to general conditions described below. The NCO content of the prepolymer was 2.23% and the MDI level of the distillate was 39%.

### Removal of Unreacted MDI from Prepolymers

### Comparative Example A

### Inefficient Removal of Unreacted MDI Monomer Without Solvents at Extreme Conditions (High Jacket Temperature and Vacuum)

U.S. Patent No. 5,703,193 describes the incomplete removal of monomeric MDI from a commercial prepolymer (Vibrathane B635) consisting essentially of the reaction product of PTMEG 1000, trace trimethylol propane, and MDI with about 14% by weight monomeric MDI. The prepolymer was passed through a conventional vertical glass wiped film evaporator with an internal condenser and a heated jacket. An evaporative surface of 0.6 square foot was used. The prepolymer was fed by gravity as it was wiped as a heated film on the inside wall of the jacket. Volatile monomer evaporated from the film and condensed to a liquid on the internal condenser. The distillate and residue flowed down to discharge pumps and receiver vessels. It was reported that the monomeric MDI level dropped from 14% to 0.35% by weight after the prepolymer passed through the apparatus once under conditions of jacket temperature 161°C, internal condenser temperature 65°C, and vacuum 0.004 torr.

### Comparative Example B

### Inefficient Removal of High Levels of Unreacted MDI Monomer Without Solvents by Using Multiple Passes

U.S. Patent No. 5,703,193 describes an inefficient removal of high levels of unreacted MDI monomer without solvents by using multiple passes. The prepolymer reaction mixture was prepared by reacting PTMEG 1000 with MDI in a 1:10 molar ratio at 60°C. The mixture was passed though a wiped film evaporator three times at a jacket temperature of 140°C for the first pass and 160°C for the next two passes. The internal condenser temperature was 43°C and the vacuum ranged from 0.02 to 0.06 torr for each pass. Under these conditions, monomeric MDI level was reduced from 57% to 21%, 3.0%, and 0.7% after the first, second, and third passes, respectively. The final prepolymer had an NCO content of 5.54%.

### Comparative Example C

### Deficiency of Removing Unreacted MDI Monomer with Solvent of Higher Boiling Temperature

U.S. Patent No. 4,385,171 describes a method for removing unreacted monomeric diisocyanate by co-distilling the prepolymer reaction product with a compound having a higher boiling point than that of the diisocyanate. This technique, however, cannot easily be applied to MDI.

Vibrathane® B 635 containing about 14% free MDI monomer was blended with dioctyl adipate (Nuoplaz DOA, Nuodex Inc.) in 85/15 wt/wt ratio to form a solution containing about 12% free MDI and 15% DOA. The boiling points at 10 torr of MDI and DOA are, respectively, 215°C and 224°C. Thus, the DOA has a slightly higher boiling point. The mixture was then processed on the same wiped film evaporator as above. The jacket temperature was 160°C, the condenser temperature was 40°C (this low temperature was possible because the DOA prevented the MDI from freezing), and the vacuum was 0.003 torr. Thus, all process conditions favored thorough removal of MDI and DOA from the prepolymer. Under these conditions, free MDI in the prepolymer was reduced to 0.04% by weight in one pass. However, DOA level was reduced only from 15% to 7.6% in one pass. Thus, while relatively low boiling diisocyanate monomers such as TDI (bp 120°C) or PPDI (bp 110°C) may benefit from inclusion of a higher-boiling solvent such as DMP (bp 147°C), this technique is much less beneficial for a higher-boiling diisocyanate monomer, such as MDI (bp 215°C). A solvent with a higher boiling temperature than MDI (such as DOA, bp 224°C) is apt to be difficult to remove at temperatures low enough to prevent thermal degradation of the prepolymer.

Comparative Examples A through C indicate that the prior art has deficiencies in removing MDI or solvents of higher boiling point temperature than that of MDI at the moderate temperatures (≤160°C) that are required to prevent thermal degradation of the prepolymer. In sharp contrast, removal of MDI became more efficient when a solvent of slightly lower boiling point temperature than that of MDI was employed.

### Example 13

### Removal of Unreacted MDI Monomer and Solvent of Lower Boiling Point

A prepolymer having a high level of monomeric MDI was prepared by reacting PTMEG 1000 (497 equivalent weight) with MDI in a 1:10 molar ratio at 70° C for 6 hours. The reaction mixture was then blended with dimethyl phthalate (bp 147°C at 10 torr). The amount of DMP was about the same as the initial MDI weight. The mixture (prepolymer, MDI, and DMP) was then passed through the wiped film evaporator used in Comparative Example B. The jacket temperature was 160°C, the internal condenser temperature was 18°C, and the vacuum ranged from 0.02 to 0.03 torr. Under these conditions, after two passes, the prepolymer contained less than 0.1% monomeric MDI, 0.02% DMP, and had an NCO content of 5.25% (93% of the theoretical value of 5.63% for pure MDI-polyol-MDI adduct).

### Example 14

### Removal of Large Excess of Unreacted MDI Monomer and Solvent of Lower Boiling Point

A large amount of volatile material can be removed efficiently from prepolymer by distillation if a solvent of lower boiling point temperature is used. Vibrathane® 8585 (an MDI prepolymer, Uniroyal Chemical Co.) was blended with an MDI/DMP (50/50) solution to form a mixture containing about 10% weight of Vibrathane 8585. The starting Vibrathane 8585 contained about 10% monomeric MDI. The mixture thus contained about 46% MDI, 45% DMP, and 9% nonvolatile polymer. The mixture was then passed once thorough the wiped film evaporator at a jacket temperature of 160°C and a vacuum of 0.04 torr. The residue thus obtained was about 10% by weight of the starting mixture and the distillate was about 90% by weight of the starting mixture. Thus, one pass successfully removed about 99% (90/91=98.9%) of the volatiles in the starting mixture.

### Example 15

### Removal of Unreacted MDI Monomer and DMP at Moderate Temperature

A prepolymer was made by reacting PEAG 2500 with MDI at an NCO:OH ratio of 6.0. The MDI was pre-dissolved in DMP to form a 50/50 (wt/wt) solution. The reaction was conducted at 80°C for 6 hours. The reaction mixture was then passed though a glass wiped film evaporator at a jacket temperature of 140°C, and a vacuum of 0.4 torr for the first pass; 140°C, 0.1 torr for the second pass; and 140°C, 0.04 torr for the third pass. An almost constant feeding rate of about 550 mL/hour was used for all three passes. The internal condenser temperature was kept at 35°C during the process. The prepolymers contained 8.05%, 0.39%, and 0.05% unreacted MDI after the first, second, and third passes, respectively. DMP content dropped to 1 % by weight after the first pass, and could not be detected (below 200 ppm) after the prepolymer passed the second and third passes. The NCO content of the prepolymer after the third pass was 2.38%, and was about 86% of the theoretical NCO content for the ABA structure.

### Example 16

### Removal of Unreacted MDI Monomer and DBP at Moderate Temperature

The reaction mixture of Example 12 was passed through the evaporator three times. The jacket temperature was 140°C, and the internal condenser was kept at 30°C for all three passes. A feeding rate of 550 mL/hour was used for each of the passes. The vacuum was 0.4 torr for the first pass, 0.1 torr for the second pass, and 0.04 torr for the third pass. Both the residue and distillate were found to be substantially colorless and clear. The prepolymer NCO content dropped to 5.07%, 2.62% and 2.23% after the first, second, and third passes, respectively. The prepolymer achieved an NCO content of 82% of theoretical for an ABA structure after the third pass. Monomeric MDI level was reduced to 12%, 0.9%, and 0.09% after the first, second, and third passes, respectively. The DBP content was reduced to 3.6%, 0.1 % and 0.04% after the first, second, and third passes, respectively.

### Preparation of Polyurethane Elastomers

### Comparative Examples D through H show deficiencies of prior art prepolymers of TDI and MDI. All are based on the common polyol PEAG 2000 for comparison.

### Comparative Example D

### Unsuccessful Cast Molding of Conventional MDI Prepolymer with Vibracure® A157

A quantity of 250.0 grams of Vibrathane 8585 (PEAG based MDI prepolymer containing ca. 10% monomeric MDI. NCO:6.63%) was added to a dry, clean pint metal can and preheated to 90° C (viscosity ca. 10 poise). The prepolymer was then mixed with 58.8 grams of Vibracure A157 pre-melted at 145°C. The material gelled out in the metal can in 30 seconds, well before the minimum 60 second pour life needed for typical casting operations.

### Comparative Example E

### Difficult Cast Molding of Conventional TDI Prepolymer with Vibracure® A157

A 234.0 gram sample of Vibrathane 8086 (PEAG 2000 based TDI prepolymer containing a significant amount of monomeric TDI. NCO 3.91 %), preheated to 85°C (viscosity 19 poise), and 32.5 grams of Vibracure A157, pre-melted at 145°C, were reacted according to the general technique described above. The material exhibited ca. 2 minutes pour life, sufficiently long for casting. At 30 minutes, it was readily demoldable without distortion. However, during casting, the prepolymer emitted strong TDI vapor, which is hazardous to health. The final specimen had 92 Shore A hardness and 33% Bashore rebound.

### Comparative Example F

### Deficiencies of Prepolymer of Low Monomeric TDI Content Cured by Vibracure® A157

A 233.0 gram sample of Adiprene LF 1800A (substantially PEAG 2000 based TDI prepolymer containing less than 0.1% monomeric TDI. NCO 3.20%) and a 26.5 gram sample of Vibracure A157 were reacted using the technique described above. Samples were cured at 100°C for 24 hours and conditioned for testing. Demold time was very long (>3 hours). The material was cured soft (ca. 67 Shore A) and had low resilience (Bashore Rebound 10%). Thus, although the issue of TDI vapor was eliminated by use of a prepolymer of low monomeric TDI content, the elastomer required a long time before demolding and had very poor properties.

### Comparative Example G

### Deficiencies of Prepolymer of Low Monomeric TDI Content Cured by MBCA

A 234.5 gram sample of Adiprene LF 1800A (PEAG 2000 based TDI prepolymer containing less than 0.1% monomeric TDI. NCO:3.20%) and a 22.7 gram sample of MBCA were reacted using the technique described above. The samples were cured at 100°C for 24 hours and conditioned for testing. In contrast with Comparative Example F above, the sample reached demolding strength in under one hour, hardness was 82 Shore A, and Bashore rebound was 31 %. The low monomeric TDI content prepolymer/MBCA system is one of the most popular systems in the casting elastomer industry today. However, although the use of prepolymers of low monomeric TDI content sharply reduces the issue of TDI exposure, the use of MBCA diamine curative (a suspect carcinogen) requires careful attention to industrial hygiene during casting and eliminates applications of the elastomer in areas such as the dry food handling industry. Furthermore, when compared to PEAG 2000 based low free MDI prepolymer cured by Vibracure® A157 (Example 17), the TDI/MBCA material is much softer and has generally inferior properties, as shown in Table 2.

### Comparative Example H

### Difficult Cast Molding of Conventional MDI Prepolymer with HQEE Diol Curative

A 235.0 gram quantity of Vibrathane 8585 (NCO 6.63%) preheated to 100° C and 35.0 grams HQEE (Eastman Kodak Company) preheated to 130°C were mixed, degassed and poured into clean, silicone-greased molds preheated to 100°C. The molds, together with the contents, were then moved to a 100°C oven and kept in the oven for 24 hours. The samples, when removed from the molds, appeared cheesy with small cracks ("starring"). Mold temperatures of at least 120°C or higher are generally required for minimizing starring with HQEE, thereby increasing energy costs and the risk of thermal bums to workers.

Comparative Examples D through H indicate that prepolymers known in the art, such as conventional MDI prepolymers, TDI prepolymers, and even TDI prepolymers containing a low monomeric TDI content exhibit difficulties in either processing, industrial hygiene, or significant deficiencies in properties. Conventional MDI prepolymers even exhibited difficulties when cured by HQEE. In sharp contrast to the known prepolymers, the MDI prepolymers of the present invention, containing low monomeric MDI content, demonstrate unique properties when cured by Vibracure A 157, HQEE, or other existing chain extenders, as shown in the following examples.

### Example 17

### Low Monomeric MDI Content Prepolymer Cured with Vibracure A157 Diamine Curative

A sample of 230.7 grams of the product of Example 4 in a dry pint metal can was heated to 85° C (viscosity 15 poise) and degassed. Then, a 26.0 gram sample of Vibracure A157, pre-melted at 145°C, was added to the prepolymer at atmospheric pressure. The material was mixed, degassed, and then poured into clean, silicone-greased molds preheated to 100°C. Under these conditions, the pour life of the system was ca. 5 minutes. The molds and their contents were then placed in a 100°C oven. The elastomers reached demolding strength in about 45 minutes. The test samples were removed from the oven after being post-cured for 24 hours and placed in an open jar. No starring was observed. After aging at room temperature for about 4 weeks, samples were submitted for ASTM tests.

### Comparative Example I

### Unsuccessful Casting of Conventional Ester-MDI Prepolymer with Vibracure® A 157

A 2238 gram sample of PEAG 2000 was reacted with 553 grams of MDI at 85° C for 4.5 hours to make a prepolymer of the same NCO content (3.18%) as Example 4 that was used in Example 17. The reaction product appeared transparent and was very viscous at 85°C, making degassing very difficult. The final product had an NCO content of 3.22% and viscosity of 32 poise at 85°C.

A 107 gram sample of the reaction product preheated to 85° ° C and a 12.2 gram sample of A157 preheated to 145°C were mixed. The mixture solidified in about 55 seconds with numerous bubbles trapped inside. Thus, though pour life could be extended to about one minute by using low temperature (85°C), casting was very difficult because of the high viscosity.

To lower the viscosity to 15 poise, the prepolymer had to be heated to 115 °C. A 109 gram sample of the reaction product preheated to 115°C and a 12.6 gram sample of A157 preheated to 145°C were mixed. The mixture was solidified in about 35 seconds after mixing. Casting was impossible because of the short pour life.

### Example 18

### Low Monomeric Content MDI Polyester Prepolymer Cured with HQEE Diol

A 16.0 gram sample of HQEE melted at 130°C and 223.5 grams of the product of Example 4 at 100°C were reacted using the general techniques described in Comparative Example H. The molds and the contents were then moved to a 70°C oven and cured for 24 hours. Samples were then removed from the molds and aged for testing as described above. Despite the low curing temperature (70°C), elastomers were found to have no starring, in sharp contrast to the behavior of conventional MDI prepolymers, which generally exhibit starring when cured by HQEE at low temperatures.

### Example 19

### Low Monomeric MDI Containing Polyester Prepolymer Cured with MBCA Diamine

A 22.1 gram sample of MBCA melted at 110°C and 230.5 grams of the product of Example 4 at 90°C were reacted according to techniques described above. Pour life was about 6 minutes. Samples were demolded after being cured at 100° C for 45 minutes, post-cured at 100°C for 24 hours, and conditioned for testing as described above.

### Example 20

### Low Monomeric MDI Containing Polyester Prepolymer Cured with 1.4-Butanediol

A sample of 238.0 grams of the product of Example 4 preheated to 90°C and 7.9 grams of dry 1,4-butanediol were reacted using techniques described above. Samples were cured at 100°C for 24 hours and conditioned for testing.

### Example 21

### Low Monomeric MDI Containing Polyether Prepolymer Cured with Vibracure A157

A 225.5 gram sample of the product of Example 1 was added to a pint metal can, preheated to 65°C (viscosity 10 poise), and degassed. Then, 42.0 grams of Vibracure A 157 melted at 145°C was added to the prepolymer. The material was then mixed, degassed, and poured into molds preheated to 100° C. The molds and their contents were then heated to 100° C. Pour life was about 2 to 3 minutes under these conditions and the material could be demolded in 45 minutes. Testing samples were removed from the oven after being post-cured for 24 hours. After aging in an open jar at room temperature for about 4 weeks, samples were submitted for tests.

### Example 22

### Low Monomeric MDI Containing Polyether Prepolymer Cured with 1,4-Butanediol

A 12.9 gram sample of dry 1,4-butanediol was added from a syringe to a 235.0 gram sample of the product of Example 1 preheated to 70°C. The material was poured into molds preheated to 100°C after being mixed and degassed. The molds and the contents were then heated to 100°C and held there for 24 hours. Samples were then aged at room temperature for about 4 weeks before testing.

### Comparative Example J

### Deficiency in Casting of Conventional Ether-MDI Prepolymer with 1,4-Butanediol at Room Temperature

A 229.0 gram sample of Vibrathane B635 and an 18.8 gram sample of dry 1,4-butanediol were mixed and degassed at room temperature for 5-10 minutes. The mixture was then poured into a clean, silicone greased (Stoner urethane mold release E236) mold at room temperature and kept at room temperature for 24 hours. The samples, which were 1" in diameter, 1/2" in thickness buttons and 7"×5"×1/8" sheets, were then removed from the molds. Both the cured buttons and the sheets were full of bubbles.

### Example 23

### Room Temperature System-Low Monomeric MDI-Containing Polyether Prepolymer Cured with 1,4-Butanediol

A 222.3 gram sample of the product of Example 1, a 12.1 gram sample of dry 1,4-butanediol, and a 0.06 gram sample of TEDA-L33 (from Tosoh USA, INC.) were mixed and degassed at room temperature. The material was then poured into the same clean, silicone-greased molds as used in Example 22 at room temperature and kept at room temperature for 24 hours. The samples were then removed from the molds and conditioned as described above before testing. Under the above casting conditions, the samples were bubble-free.

### Comparative Example K

### Unsuccessful Casting of Conventional Ether-MDI Prepolymer with Ethacure^{™} 100 LC

A 500 gram sample of Acclaim^{™} 3201 (PPG-EO 3000) was reacted with 82.8 grams of MDI at 90°C for 3.5 hours. The reaction product had an NCO content of 2.39%, and appeared transparent. A 173 gram sample of the reaction product and an 8.3 gram sample of Ethacure^{™} 100 LC were mixed at room temperature. The mixture solidified in about 55 seconds in the metal can. Casting was impossible because of the short pour life. The solid elastomer in the mix can was opaque and full of trapped air bubbles.

### Example 24

### Low Monomeric MDI-Containing Polyether Prepolymer Cured with Ethacure^{™} 100 LC

A 3.79 gram sample of Ethacure^{™} 100 LC (from Albemarle Corporation) was added via a syringe to an 81.5 gram sample of the product of Example 7 and mixed at room temperature. The viscosity of the prepolymer was 84 poise at 25° C, which is much lower than that obtained in Comparative Example K. The material was degassed and poured into molds preheated to 100° C. The contents and the molds were then moved to a 100°C oven and cured at that temperature for 24 hours. Samples were then conditioned as described above for testing. Under the above casting conditions, the pour life was slightly over 1 minute and the elastomer was ready to be demolded in less than 10 minutes. The sample was clear and low in color and had excellent resilience.

### Example 25

### Low Monomeric MDI-Containing Polyether Prepolymer Blend Cured with MBCA

A 25.0 gram sample of the product of Example 9 and a 75.0 gram sample of the product of Example 6 were mixed and degassed. The material was reacted with a 14.9 gram sample of MBCA using the procedure described in Example 22. Samples were cured at 100°C for 24 hours and conditioned for testing as described above. The pour life was 5 minutes. Test results for Examples 17 througn 25 and Comparative Examples F and G are summarized in Tables 2 and 3.

| Table 2 | | | | | | | |
|---|---|---|---|---|---|---|---|
| Polyurethane Elastomers from PEAG 2000 Based Prepolymer | | | | | | | |
| Example | | 17 | 18 | 19 | 20 | F | G |
| Curative | | A157 | HQEE | MBCA | BDO | A157 | MBCA |
| Hardness | | 95A | 90A | 90A | 76A | 67A | 82A |
| 100% Modulus, psi | | 1450 | 993 | 1160 | 500 | 280 | 700 |
| 300% Modulus, psi | | 3050 | 2091 | 2600 | 930 | 460 | 1400 |
| Elongation at Break, % | | 550 | 640 | 530 | 620 | 620 | 600 |
| Tensile Strength, psi | | 7350 | 7928 | 9450 | 8800 | 1040 | 7100 |

| Tear Strength | | | | | | | |
|---|---|---|---|---|---|---|---|
| Split, pli | @ 25°C | 150 | 137 | 125 | 113 | 38 | 125 |
| | @ 70°C | 85 | 85 | 67 | 50 | 29 | |
| Trouser,pli@25°C | | 340 | 250 | 224 | 152 | 100 | 250 |

| Compression Set, % | | | | | | | |
|---|---|---|---|---|---|---|---|
| 22 hour @ 70°C | | 41 | 22 | 28 | 35 | 48 | 35 |
| Bashore Rebound, % | | 43 | 45 | 34 | 42 | 10 | 31 |

| Tan δ | | | | | | | |
|---|---|---|---|---|---|---|---|
| | 30°C | 0.055 | | | | 0.141 | 0.075 |
| | 50°C | 0.037 | | | | 0.047 | 0.039 |
| | 70°C | 0.026 | | | | 0.028 | 0.026 |
| | 140°C | 0.015 | | | | 0.047 | 0.015 |

| Table 3 | | | | | |
|---|---|---|---|---|---|
| Polyurethane Elastomers from Polyether Based Prepolymer | | | | | |
| Example | 21 | 22 | 23 | 24 | 25 |
| Curative | A157 | BDO | BDO | DETDA | MBCA |
| Hardness | 56D | 47D | 44D | 78A | 95A |
| 100% Modulus, psi | 2970 | 1680 | 1370 | | |
| 300% Modulus, psi | 5590 | 2340 | 1830 | | |
| Elongation at Break, % | 360 | 460 | 460 | | |
| Tensile Strength, psi | 7280 | 6920 | 4330 | | |

| Tear Strength | | | | | |
|---|---|---|---|---|---|
| Split, pli @ 25°C | 150 | 98 | 130 | | |
| @ 70°C | 70 | 35 | 45 | | |
| Trouser,pli@25°C | 280 | 110 | 170 | | |
| Compression Set, % | 37 | 35 | 43 | | |
| Bashore Rebound, % | 51 | 48 | 53 | 72 | 32 |

From Tables 2 and 3, it is evident that by simply changing chain extenders, prepolymers containing low monomeric content, such as the PEAG 2000 based prepolymer (Example 4) exhibit sound properties in a wide hardness range. Among the chain extenders, amine curatives, especially the Vibracure A157, give higher hardness, modulus, and tear strength.

The outstanding performance of the low monomeric MDI-containing prepolymer cured by Vibracure® A157 is in sharp contrast to that of the low monomeric TDI containing prepolymers cured by A157 or MBCA, as illustrated by Example 17, F, and G in Table 2. It exhibits generally better properties in hardness, resilience, tear strength, and dynamics. A157 (trimethylene glycol di-p-aminobenzoate) has been approved by the FDA for use in polyurethanes contacting dry food. Low monomeric MDI-containing prepolymer and A157 thus provide one of the safest cast urethane systems. Further, the system improves the properties of urethane elastomers, as opposed to the prepolymers containing low monomeric TDI content cured with A 157.

It is remarkable that the PTMEG 1000 based prepolymer can be cured at room temperature by 1,4-butanediol without bubbles and without sacrificing properties. Except for a slightly lower hardness, modulus, and tensile strength, the product of Example 23 exhibits better tear strength and resilience as compared to the product of Example 22. Even with low cost polyols, such as PPG, low monomeric content prepolymers can give excellent properties. Example 24 indicates that when a PPG/EO 3000 based MDI prepolymer was cured by Ethacure^{™} 100, the material gave a very high Bashore rebound of 72%. The elastomer was highly transparent and low in color. This kind of material is well suited for applications where high resilience and transparency may be required, such as recreational skate wheels and golf ball covers.

As demonstrated by Example 25. the prepolymer can be adjusted by adding short MDI-glycol adducts (or short MDI-triol adducts).

In view of the many changes and modifications that can be made without departing from principles underlying the invention, reference should be made to the appended claims for an understanding of the scope of the protection to be afforded the invention.

## Claims

1. A process for reducing the amount of residual aromatic diisocyanate monomer in a polyurethane prepolymer reaction product comprising distilling the product in the presence of at least one inert solvent having a boiling point about 1 °C to about 100°C below the boiling point of the diisocyanate monomer at a pressure of 10 torr, wherein the aromatic diisocyanate monomer has a boiling point above about 200°C at 10 torr, the weight ratio of the inert solvent to the residual aromatic diisocyanate monomer ranges from about 90:10 to about 10:90, and the inert solvent comprises about 5% to about 85% by weight of the total weight of the combination of the prepolymer reaction product mixture plus solvents.

2. The process of claim 1 wherein the monomeric diisocyanate comprises at least one isomer of diphenylmethane diisocyanate.

3. The process of claim 2 wherein the inert solvent is selected from the group consisting of organic aromatic esters, aliphatic esters, and mixtures thereof, having boiling points in the range of from about 115°C to about 214°C at 10 torr.

4. The process of claim 2 wherein the distillation step comprises at least three agitated film vacuum distillation stages in series, each at an evaporative temperature of up to about 150°C.

## Patentansprüche

1. Verfahren zur Verringerung der Menge von restlichem aromatischem Düsocyanatmonomer in einem Polyurethanprepolymer-Reaktionsprodukt, umfassend ein Destillieren des Produkts in Gegenwart von mindestens einem inerten Lösemittel, das einen Siedepunkt etwa 1 °C bis etwa 100 °C unterhalb des Siedepunkts des Düsocyanatmonomers aufweist bei einem Druck von 10 Torr, wobei das aromatische Düsocyanatmonomer einen Siedepunkt oberhalb von etwa 200 °C bei 10 Torr aufweist, das Gewichtsverhältnis des inerten Lösemittels zu dem restlichen aromatischen Düsocyanatmonomer in einem Bereich liegt von etwa 90:10 bis etwa 10:90, und das inerte Lösemittel etwa 5 bis etwa 85 Gew.-% des Gesamtgewichts der Kombination des Prepolymer-Reaktionsproduktgemisches plus Lösemittel umfasst.

2. Verfahren nach Anspruch 1, wobei das monomere Diisocyanat mindestens ein Isomer von Diphenylmethandiisocyanat umfasst.

3. Verfahren nach Anspruch 2, wobei das inerte Lösemittel ausgewählt ist aus der Gruppe, bestehend aus organischen aromatischen Estern, aliphatischen Estern und Gemischen davon, die Siedepunkte in dem Bereich von etwa 115 °C bis etwa 214 °C bei 10 Torr aufweisen.

4. Verfahren nach Anspruch 2, wobei die Destillationsstufe mindestens drei vermischte oder aufgerührte Filmvakuumdestillationsstufen in Reihe, jede bei einer Verdampfungstemperatur von bis zu etwa 150 °C umfasst.

## Revendications

1. Procédé pour réduire la quantité de monomère diisocyanate aromatique résiduel dans un produit réactionnel de prépolymère de polyuréthane comprenant la distillation du produit en présence d'au moins un solvant inerte ayant un point d'ébullition d'environ 1°C à environ 100°C en dessous du point d'ébullition du monomère diisocyanate sous une pression de 10 torrs, dans lequel le monomère diisocyanate aromatique a un point d'ébullition supérieur à environ 200°C à 10 torrs, le rapport en poids du solvant inerte au monomère diisocyanate aromatique résiduel s'échelonne d'environ 90:10 à environ 10:90, et le solvant inerte comprend environ 5 % à environ 85 % en poids du poids total de la combinaison du mélange de produit réactionnel de prépolymère et des solvants.

2. Procédé selon la revendication 1, dans lequel le diisocyanate monomère comprend au moins un isomère de diphénylméthane diisocyanate.

3. Procédé selon la revendication 2, dans lequel le solvant inerte est choisi dans le groupe constitué par les esters aromatiques organiques, les esters aliphatiques et les mélanges de ceux-ci, ayant des points d'ébullition dans la plage d'environ 115°C à environ 214°C à 10 torrs.

4. Procédé selon la revendication 2, dans lequel l'étape de distillation comprend au moins trois étages de distillation sous vide à film agité en série, chacun à une température d'évaporation allant jusqu'à environ 150°C.
